# EUROPEAN PATENT APPLICATION

(11) **EP 4 350 854 A2**
(43) Date of publication of application: **10.04.2024**
(21) Application number: 23197370.2
(22) Date of filing: 14.09.2023
(51) Int. Cl.: H01M 50/188, H01M 50/109, H01M 50/169, H01M 50/186, H01M 50/19, H01M 50/55, H01M 50/564

(54) **BUTTON CELL**

(30) Priority: 04.10.2022 KR 20220126511
(71) Applicant: Samsung SDI Co., Ltd., Yongin-si, Gyeonggi-do 17084 (KR)
(72) Inventor: Woo, Byongchul, 17084 Yongin-si, Gyeonggi-do (KR)
(74) Representative: Gulde & Partner

(57) **Abstract**

A button cell includes: an electrode assembly that includes a first electrode, a second electrode, and a separator disposed between the first electrode and the second electrode; a case that is connected to the first electrode to accommodate the electrode assembly and includes an opening exposing the electrode assembly; a cap plate that is coupled to the case to cover an outer area of the opening and includes a through-hole exposing a central area of the opening; a terminal plate that is connected to the second electrode to be insulated from and bonded to the cap plate and covers the through-hole; a bonding layer that is disposed between the cap plate and the terminal plate and insulates and bonds between the cap plate and the terminal plate; and an insulating structure that is adjacent to the bonding layer and is disposed between the cap plate and an edge of the terminal plate.

## Description

### BACKGROUND

### (a) Field of the Invention

The present disclosure relates to a button cell.

### (b) Description of the Related Art

In general, a rechargeable battery (or a secondary battery) is a battery that may be charged and discharged.

As a demand for a wearable device such as a headphone, an earphone, a smartwatch, a body-attached medical device, or the like using wireless communication such as Bluetooth or the like has recently increased, a need for a button cell that is an ultra-small rechargeable battery mounted on the wearable device is increasing.

Such a conventional button cell includes an electrode assembly including two electrodes, a case accommodating the electrode assembly and connected to one electrode of the electrode assembly, a cap plate coupled to the case to have the same polarity as that of the one electrode, and a terminal plate that is insulated from the cap plate and is bonded to the cap plate to be connected to the other electrode of the electrode assembly.

However, there is a problem in which the conventional button cell has a short circuit between the cap plate and the terminal plate during a manufacturing process of the button cell, during transportation of the button cell, or during use of the button cell.

The above information disclosed in this Background section is only for enhancement of understanding of the background of the disclosure, and therefore it may contain information that does not form the prior art that is already known in this country to a person of ordinary skill in the art.

### SUMMARY

An object of the present invention is to provide a button cell in which a short circuit between a cap plate and a terminal plate that are insulated from and bonded to each other is suppressed.

The invention is set out in the appended set of claims, wherein the drawings and respective description relate to advantageous embodiments thereof.

The present invention provides a button cell including: an electrode assembly that includes a first electrode, a second electrode, and a separator disposed between the first electrode and the second electrode; a case that is connected to the first electrode to accommodate the electrode assembly and includes an opening exposing the electrode assembly; a cap plate that is coupled to the case to cover an outer area of the opening and includes a through-hole exposing a central area of the opening; a terminal plate that is connected to the second electrode to be insulated from and bonded to the cap plate and covers the through-hole; a bonding layer that is disposed between the cap plate and the gterminal plate and insulates and bonds between the cap plate and the terminal plate; and an insulating structure that is adjacent to the bonding layer and is disposed between the cap plate and an edge of the terminal plate.

The insulating structure may include a different material from a material of the bonding layer.

The edge of the terminal plate may include: a rear surface facing the cap plate; a front surface disposed at an opposite surface of the rear surface; and a side surface connecting between the rear surface and the front surface.

The insulating structure may include a first portion in contact with the rear surface of the edge of the terminal plate.

The first portion may contact the cap plate.

The insulating structure may further include a second portion that extends from the first portion to contact the side surface of the edge of the terminal plate.

The insulating structure may further include a third portion that extends from the second portion to contact the front surface of the edge of the terminal plate.

The insulating structure may include a fourth portion contacting the side surface of the edge of the terminal plate and the cap plate.

The insulating structure may further include a fifth portion that extends from the fourth portion and contacts the front surface of the edge of the terminal plate.

The terminal plate may include: a flange that covers the through-hole and contacts the bonding layer and the insulating structure; and a protrusion that protrudes from the flange to pass through the through-hole. The edge may be an edge of the flange.

The insulating structure may extend from the edge of the flange to an edge of the cap plate.

The electrode assembly may further include: a first electrode tab that extends from the first electrode to be welded to the case; and a second electrode tab that extends from the second electrode to be welded to the protrusion of the terminal plate.

The case and the cap plate may have the same polarity as a polarity of the first electrode, and the terminal plate may have the same polarity as a polarity of the second electrode.

The button battery may include a coin cell.

A ratio (height/diameter) of a height to a diameter of the button cell may be 1 or less.

According to the embodiment, the button cell according to the invention in which the short circuit between the cap plate and the terminal plate that are insulated from and bonded to each other is suppressed, is provided.

### BRIEF DESCRIPTION OF THE DRAWINGS

FIG. 1 is a perspective view showing a button cell according to an embodiment.
FIG. 2 is a cross-sectional view taken along line II-II of FIG. 1.
FIG. 3 is an enlarged view of a portion A of FIG. 2.
FIG. 4 is a cross-sectional view showing a portion of a button cell according to another embodiment.
FIG. 5 is a cross-sectional view showing a portion of a button cell according to another exemplary embodiment.
FIG. 6 is a cross-sectional view showing a portion of a button cell according to another exemplary embodiment.
FIG. 7 is a cross-sectional view showing a portion of a button cell according to another exemplary embodiment.

### DETAILED DESCRIPTION OF THE EMBODIMENTS

The present invention is set out in the appended set of claims, wherein the drawings and respective description relate to advantageous embodiments thereof. The present disclosure will be described more fully hereinafter with reference to the accompanying drawings, in which embodiments of the disclosure are shown.

In addition, unless explicitly described to the contrary, the word "comprise" and variations such as "comprises" or "comprising" will be understood to imply the inclusion of stated elements but not the exclusion of any other elements.

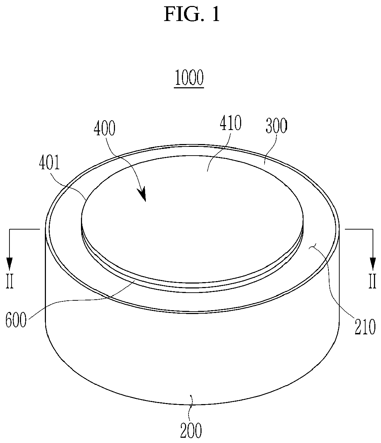

Hereinafter, a button cell according to an embodiment will be described with reference to FIGS. 1 to 3.

The button cell according to the embodiment is an ultra-small rechargeable battery (or an ultra-small secondary battery), and may include a coin cell, but the present disclosure is not limited thereto, and it may include a cylindrical or pin-type cell.

Here, the button cell is a thin coin-type or button-type cell, and may mean a battery having a ratio (height/diameter) of a height to a diameter of one or less, but is not limited thereto. Since the button cell is mainly cylindrical, a horizontal cross-section is circular, but the present disclosure is not limited thereto, and a horizontal cross-section may be oval or polygonal. In this case, the diameter may mean a maximum distance of the cell based on a horizontal direction of the cell, and the height may mean a maximum distance (distance from a flat bottom surface thereof to a flat uppermost surface) of the cell based on a vertical direction of the cell.

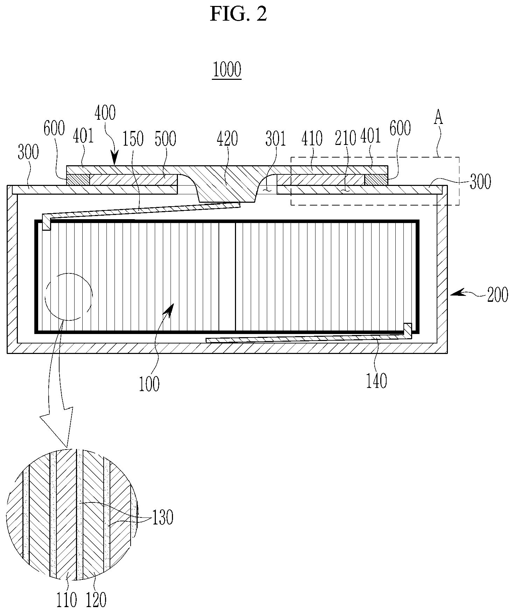

FIG. 1 is a perspective view showing a button cell according to an embodiment. FIG. 2 is a cross-sectional view taken along line II-II of FIG. 1.

Referring to FIGS. 1 and 2, the button cell 1000 according to the embodiment is a rechargeable battery capable of charging and discharging, and includes an electrode assembly 100, a case 200, a cap plate 300, a terminal plate 400, a bonding layer 500, and an insulating structure 600.

The electrode assembly 100 is accommodated in the case 200. A lower portion of the electrode assembly 100 faces a bottom portion of the case 200, and an upper portion of the electrode assembly 100 faces the cap plate 300 covering an opening 210 of the case 200 and the terminal plate 400. The upper and lower portions of the electrode assembly 100 may have planar shapes that are parallel to each other, but are not limited thereto.

The electrode assembly 100 includes a first electrode 110, a second electrode 120, a separator 130.

The electrode assembly 100 may include a first electrode 110, a second electrode 120, a separator 130, a first electrode tab 140, and a second electrode tab 150.

The first electrode 110 and the second electrode 120 are spaced apart from each other, and the separator 130 including an insulating material is disposed between the first electrode 110 and the second electrode 120. The first electrode 110 may be a negative electrode (anode) and the second electrode 120 may be a positive electrode (cathode), but the present disclosure is not limited thereto, and the first electrode 110 may be a positive electrode and the second electrode 120 may be a negative electrode.

The first electrode 110 may has a shape of a band extending in one direction, and may include a negative electrode coated region that is a region where a negative active material layer (anode active material layer) is coated to a current collector of a metal foil (for example, a Cu foil) and a negative electrode uncoated region that is a region where an active material is not coated, but the present disclosure is not limited thereto. The negative electrode uncoated region may be disposed at one end portion in an extending direction of the first electrode 110.

The second electrode 120 may has a band shape that is spaced apart from the first electrode 110 to extend in one direction with the separator 130 interposed therebetween, and may include a positive electrode coated region that is a region where a positive active material layer (cathode active material layer) is coated to a current collector of a metal foil (for example, an AI foil) and a positive electrode uncoated region that is a region where an active material is not coated, but the present disclosure is not limited thereto,. The positive electrode uncoated region may be disposed at one end portion in an extending direction of the second electrode 120.

The separator 130 may extend in one direction between the first electrode 110 and the second electrode 120 to prevent a short circuit between the first electrode 110 and the second electrode 120.

The first electrode 110, the separator 130, and the second electrode 120 are sequentially stacked and wound in a jelly roll shape, but are not limited thereto, and may be provided in various known shapes. Each of the first electrode 110, the second electrode 120, and the separator 130 may include various known materials.

The first electrode tab 140 extends from the first electrode 110 of the electrode assembly 100 to the case 200. The first electrode tab 140 is coupled to a bottom portion of the case 200 to connect the first electrode 110 and the case 200. The first electrode tab 140 contacts the first electrode 110 and the case 200. The first electrode tab 140 is welded to the bottom portion of the case 200, but is not limited thereto, and the first electrode tab 140 may contact the bottom portion of the case 200. By the first electrode tab 140, the case 200 and the cap plate 300 have the same polarity as that of the first electrode 110.

The second electrode tab 150 extends from the second electrode 120 of the electrode assembly 100 to the terminal plate 400. The second electrode tab 150 is coupled to a protrusion 420 of the terminal plate 400 to connect the second electrode 120 and the terminal plate 400. The second electrode tab 150 contacts the second electrode 120 and the terminal plate 400. The second electrode tab 150 is welded to a surface of the protrusion 420 of the terminal plate 400, but is not limited thereto, and the second electrode tab may contact the surface of the protrusion 420. By the second electrode tab 150, the terminal plate 400 has the same polarity as that of the second electrode 120.

On the other hand, a center pin penetrating a center of the electrode assembly 100 in a vertical direction may be disposed at a central portion of the electrode assembly 100, and the center pin may support the first electrode tab 140 and the second electrode tab 150, but is not limited thereto.

The case 200 is coupled to the first electrode 110 of the electrode assembly 100 to house the electrode assembly 100. The case 200 includes the opening 210 that exposes an upper portion of the electrode assembly 100. Since the bottom portion of the case 200 is welded to the first electrode tab 140 to be connected to the first electrode 110 of the electrode assembly 100, the case 200 has the same polarity as that of the first electrode 110. The case 200 may has a cylindrical can shape for accommodating the electrode assembly 100 of a jelly roll shape, but is not limited thereto, and may have various known shapes. The case 200 may accommodate various known electrolyte solutions along with the electrode assembly 100. An outer surface of the case 200 and an outer surface of the cap plate 300 may be a first electrode terminal of the button cell 1000, but are not limited thereto. In this case, an upper surface of a flange (a flange portion) 410 that is an outer surface of the terminal plate 400 may be a second electrode terminal of the button cell 1000, but is not limited thereto. On the other hand, a plating layer may be coated at the outer surface of the case 200, but the present disclosure is not limited thereto, and various known coating layers may be coated at the outer surface of the case 200. The case 200 may include stainless steel, but is not limited thereto, and the case may include various known metals.

The opening 210 of the case 200 is covered by the cap plate 300 and the terminal plate 400.

The cap plate 300 is combined with the case 200 to cover an outer area of the opening 210. The cap plate 300 includes a through-hole 301 that exposes a central area of the opening 210. The cap plate 300 may be directly coupled to a side wall of the case 200 in which the opening 210 of the case 200 is provided by a welding process or the like to cover the outer area of the opening 210. The cap plate 300 may has a ring shape by the through-hole 301 provided in a central portion thereof, but is not limited thereto. The cap plate 300 is combined with the case 200 to have the same polarity as that of the first electrode 110. Accordingly, the cap plate 300 and the case 200 have the same polarity as that of the first electrode 110. The outer surface of the cap plate 300 may be a first electrode terminal of the button cell 1000, but is not limited thereto. The cap plate 300 is insulated and bonded to the terminal plate 400 with the bonding layer 500 interposed therebetween. The cap plate 300 may include stainless steel, but is not limited thereto, and the cap plate may include various known metals.

The terminal plate 400 is connected to the second electrode 120 to be insulated from and bonded to the cap plate 300 by the bonding layer 500. The terminal plate 400 covers the through-hole 301 of the cap plate 300. The terminal plate 400 is disposed above the cap plate 300. The terminal plate 400 covers the central area of the opening 210 of the case 200 exposed by the through-hole 301 of the cap plate 300. The terminal plate 400 covers the central area of the opening 210, and the cap plate 300 covers the outer area of the opening 210 so that the opening 210 of the case 200 is completely covered by the terminal plate 400 and the cap plate 300. The terminal plate 400 firmly seals the electrode assembly 100 together with the case 200, the cap plate 300, and the bonding layer 500. The terminal plate 400 is coupled to the second electrode tab 150 of the electrode assembly 100 to be connected to the second electrode 120 of the electrode assembly 100. The terminal plate 400 has the same polarity as that of the second electrode 120.

The terminal plate 400 may include the flange 410 and the protrusion 420.

The flange 410 is disposed above the cap plate 300, and overlaps the cap plate 300 to cover the through-hole 301. The flange 410 has a larger area than the protrusion 420. The flange 410 may have a larger diameter than the protrusion 420. The flange 410 has a thinner thickness than the protrusion 420, but is not limited thereto. A rear surface of the flange 410 contacts the bonding layer 500, and the flange 410 is insulated and bonded to the cap plate 300 by the bonding layer 500. A front surface of the flange 410 may be the second electrode terminal of the button cell 1000. An edge (or a rim) 401 of the flange 410 is an edge 401 of the terminal plate 400. For example, the edge 401 of the terminal plate 400 includes the edge 401 of the flange 410.

The protrusion 420 protrudes from the flange 410 to pass through the through-hole 301. The protrusion 420 is connected to the second electrode 120 through the through-hole 301 from the flange 410. The surface of the protrusion 420 is coupled to the second electrode tab 150. The surface of the protrusion 420 may be welded to the second electrode tab 150, but is not limited thereto. Since the protrusion 420 is coupled to the second electrode tab 150, the protrusion 420 and the flange 410 of the terminal plate 400 have the same polarity as that of the second electrode 120. The surface of the protrusion 420 coupled to the second electrode tab 150 may have a smaller diameter than that of the front surface of the flange 410 that may be an electrode terminal. The protrusion 420 and the flange 410 are integrally provided using a forging process or the like, but are not limited thereto, and different materials may be combined to provide the terminal plate 400.

The plating layer may be coated at the outer surface of the terminal plate 400, but the present disclosure is not limited thereto, and various known coating layers may be coated on the outer surface of the terminal plate 400. The terminal plate 400 includes aluminum, but is not limited thereto, and the terminal plate may include various known metals.

The bonding layer 500 is disposed between the cap plate 300 and the flange 410 of the terminal plate 400. The bonding layer 500 insulates and bonds between the cap plate 300 and the terminal plate 400. The bonding layer 500 includes an insulating material, and insulates between the cap plate 300 and the terminal plate 400. The bonding layer 500 may be thermally fused between the cap plate 300 and the flange 410 of the terminal plate 400 using heat, a laser beam, or the like, but is not limited thereto. The bonding layer 500 may include a polypropylene resin, but is not limited thereto, and the bonding layer may include various known resins that insulate and bond between the cap plate 300 and the terminal plate 400. Since the bonding layer 500 bonds between the cap plate 300 and the terminal plate 400, the opening 210 of the case 200 in which the electrode assembly 100 is accommodated is completely sealed by the cap plate 300, the terminal plate 400, and the bonding layer 500.

For example, the bonding layer 500 may include a thermosetting resin and a thermoplastic resin. The thermosetting resin and the thermoplastic resin of the bonding layer 500 may be stacked in a plurality of layers, but the present disclosure is not limited thereto. The thermosetting resin of the bonding layer 500 is cured by heat, and may include various known thermosetting resins such as a phenol resin, a urea resin, a melamine resin, an epoxy resin, a polyester resin, and the like. The thermoplastic resin of the bonding layer 500 includes a polypropylene resin that melts at a set temperature, but the present disclosure is not limited thereto, and the thermoplastic resin of the bonding layer 500 may include various known thermoplastic resins such as a polystyrene resin, a polyethylene resin, a polyvinyl chloride resin, and the like.

The bonding layer 500 is cured by heat, and the resin included in the bonding layer 500 may be cured by heat, a laser beam, or the like between the cap plate 300 and the flange 410 of the terminal plate 400 to reduce a volume so that a space is provided between the edge 401 of the flange 410 of the terminal plate 400 and the cap plate 300. The insulating structure 600 for preventing a short circuit between the terminal plate 400 and the cap plate 300 is disposed in the space between the edge 401 of the flange 410 of the terminal plate 400 and the cap plate 300.

The insulating structure 600 is adjacent to the bonding layer 500 and has a planar loop shape along the edge 401 of the flange 410 of the terminal plate 400, but the present disclosure is not limited thereto, and the insulating structure may have a planar circular shape, a planar oval shape, a planar polygonal shape, or the like. The insulating structure 600 is applied between the edge 401 of the flange 410 of the terminal plate 400 and the cap plate 300, or may be inserted between the edge 401 of the flange 410 of the terminal plate 400 and the cap plate 300 to be disposed between the edge 401 and the cap plate 300, but the present disclosure is not limited thereto.

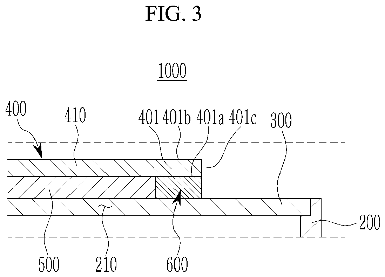

FIG. 3 is an enlarged view of a portion A of FIG. 2.

Referring to FIG. 3, the insulating structure 600 is adjacent to the bonding layer 500 and is disposed between the cap plate 300 and the edge 401 of the flange 410 that is the edge 401 of the terminal plate 400. The edge 401 of the flange 410 of the terminal plate 400 includes a rear surface 401a facing the cap plate 300 with the insulating structure 600 interposed therebetween, a front surface 401b disposed at an opposite surface of the rear surface 401a, and a side surface 401c connecting between the rear surface 401a and the front surface 401b. The side surface 401c of the edge 401 of the flange 410 of the terminal plate 400 includes an outermost end portion of the terminal plate 400.

The insulating structure 600 is disposed between the rear surface 401a of the edge 401 of the flange 410 of the terminal plate 400 and the cap plate 300 so that a short circuit between the edge 401 of the flange 410 of the terminal plate 400 and the cap plate 300 is prevented. The insulating structure 600 contacts the rear surface 401a of the edge 401 of the flange 410 of the terminal plate 400 and the cap plate 300 so that the short circuit between the edge 401 of the flange 410 of the terminal plate 400 and the cap plate 300 is prevented. The insulating structure 600 may include a different material from that of the bonding layer 500, and the insulating structure 600 may include a material having different physical properties (e.g., elastic modulus, Young's modulus, and the like) compared with those of the bonding layer 500 so that an effect of preventing a short circuit between the edge 401 of the flange 410 of the terminal plate 400 and the cap plate 300 is maximized.

For example, when the bonding layer 500 includes a first resin, the insulating structure 600 may include a second resin (e.g., an epoxy resin or the like) different from the first resin. As another example, when the bonding layer 500 includes a resin, the insulating structure 600 may include an insulating material including an inorganic material such as a metal oxide or the like.

Thus, the button cell 1000 according to the embodiment includes the insulating structure 600 that is adjacent to the bonding layer 500 between the cap plate 300 and the terminal plate 400 insulated and bonded by the bonding layer 500 and is disposed between the cap plate 300 and the edge 401 of the terminal plate 400 so that a short circuit between the cap plate 300 and the terminal plate 400 is suppressed during a manufacturing process of the button cell 1000, during transportation of the button cell 1000, or during use of the button cell 1000.

For example, the resin included in the bonding layer 500 that insulates and bonds between the cap plate 300 and the flange 410 of the terminal plate 400 may be cured by heat, a laser beam, or the like to reduce a volume so that a short circuit occurs between the cap plate 300 and the edge 401 of the flange 410 of the terminal plate 400 through a space provided between the cap plate 300 and the edge 401 of the flange 410 of the terminal plate 400. However, the button cell 1000 according to the embodiment may include the insulating structure 600 that is adjacent to the bonding layer 500 and is disposed in a space between the cap plate 300 and the edge 401 of the flange 410 of the terminal plate 400 so that a short circuit between the cap plate 300 and the edge 401 of the terminal plate 400 is suppressed.

In addition, the button cell 1000 according to the embodiment may include the insulating structure 600 that is adjacent to the bonding layer 500 disposed between the cap plate 300 and the flange 410 of the terminal plate 400 and is disposed between the cap plate 300 and the edge 401 of the flange 410 of the plate 400 so that the bonding layer 500 and the insulating structure 600 suppress moisture from penetrating into the inside of the button cell 1000 through between the cap plate 300 and the terminal plate 400 from the outside. Thus, a voltage drop due to the moisture penetrated from the outside is prevented.

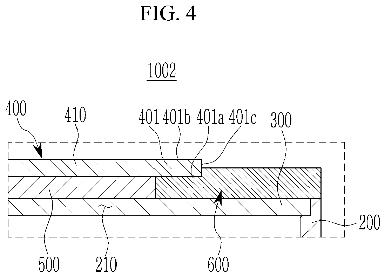

Hereinafter, a button cell according to another embodiment will be described with reference to FIG. 4.

Hereinafter, the button cell according to the other embodiment will be described with respect to a portion different from the button battery according to the embodiment described above.

FIG. 4 is a cross-sectional view showing a portion of the button cell according to the other embodiment.

Referring to FIG. 4, the insulating structure 600 of the button cell 1002 according to the other embodiment is adjacent to the bonding layer 500 and is disposed between the edge 401 of the flange 410 that is the edge 401 of the terminal plate 400 and the cap plate 300.

The insulating structure 600 extends from between the rear surface 401a of the edge 401 of the flange 410 of the terminal plate 400 and the cap plate 300 to an edge of the cap plate 300 so that a short circuit between the edge 401 of the flange 410 of the terminal plate 400 and the cap plate 300 is prevented.

The insulating structure 600 is in contact with the rear surface 401a of the edge 401 of the flange 410 of the terminal plate 400 and a surface of the cap plate 300 so that a short circuit between the edge 401 of the flange 410 of the terminal plate 400 and the surface of the cap plate 300 is prevented.

As described above, the button cell 1002 according to the other embodiment includes the insulating structure 600 that is adjacent to the bonding layer 500 between the cap plate 300 and the terminal plate 400 insulated and bonded by the bonding layer 500 and extends from between the cap plate 300 and the edge 401 of the terminal plate 400 to the edge of the cap plate 300 so that a short circuit between the cap plate 300 and the terminal plate 400 is suppressed during a manufacturing process of the button cell 1002, during transportation of the button cell 1002, or during use of the button cell 1002.

In addition, the button cell 1002 according to the other embodiment includes the insulating structure 600 that is adjacent to the bonding layer 500 disposed between the cap plate 300 and the flange 410 of the terminal plate 400 and extends from between the cap plate 300 and the edge 401 of the flange 410 of the terminal plate 400 to the edge of the cap plate 300 so that the bonding layer 500 and the insulating structure 600 suppress moisture from penetrating into the inside of the button cell 1002 through between the cap plate 300 and the terminal plate 400 from the outside. Thus, a voltage drop due to the moisture penetrated from the outside is prevented.

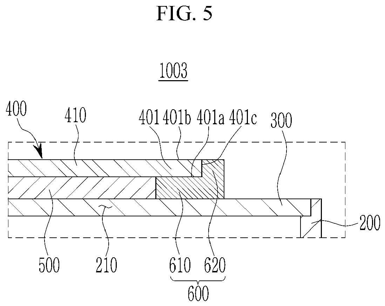

Hereinafter, a button cell according to another embodiment will be described with reference to FIG. 5.

Hereinafter, the button cell according to the other embodiment will be described with respect to a different portion from the button battery according to the embodiment described above.

FIG. 5 is a cross-sectional view showing a portion of the button cell according to the other embodiment.

Referring to FIG. 5, the insulating structure 600 of the button cell 1003 according to the other embodiment includes a first portion 610 and a second portion 620.

The first portion 610 is adjacent to the bonding layer 500, and is disposed between the cap plate 300 and the edge 401 of the flange 410 that is the edge 401 of the terminal plate 400. The first portion 610 contacts the rear surface 401a of the edge 401 of the terminal plate 400 and the cap plate 300.

The second portion 620 bends and extends from the first portion 610 to contact the cap plate 300 and the side surface 401c of the edge 401 of the flange 410 of the terminal plate 400.

The insulating structure 600 includes the first portion 610 and the second portion 620 extending from between the rear surface 401a of the edge 401 of the flange 410 of the terminal plate 400 and the cap plate 300 to the side surface 401c of the edge 401 of the flange 410 so that a short circuit between the edge 401 of the flange 410 of the terminal plate 400 and the cap plate 300 is prevented.

Thus, the button cell 1003 according to the other embodiment includes the first portion 610 and the second portion 620 that are adjacent to the bonding layer 500 between the cap plate 300 and the terminal plate 400 insulated and bonded by the bonding layer 500 and extend from between the cap plate 300 and the edge 401 of the terminal plate 400 to the side surface 401c of the edge 401 of the flange 410 so that a short circuit between the cap plate 300 and the terminal plate 400 is suppressed during a manufacturing process of the button cell 1003, during transportation of the button cell 1003, or during use of the button cell 1003.

In addition, the button cell 1003 according to the other embodiment includes the first portion 610 and the second portion 620 that are adjacent to the bonding layer 500 disposed between the cap plate 300 and the flange 410 of the terminal plate 400 and extend from between the cap plate 300 and the edge 401 of the flange 410 of the terminal plate 400 to the side surface 401c of the edge 401 of the flange 410 so that the bonding layer 500 and the insulating structure 600 suppress moisture from penetrating into the inside of the button cell 1003 through between the cap plate 300 and the terminal plate 400 from the outside. Thus, a voltage drop due to the moisture penetrated from the outside is prevented.

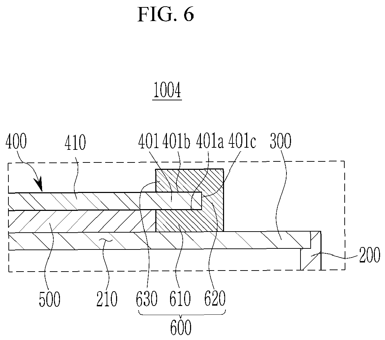

Hereinafter, a button cell according to another embodiment will be described with reference to FIG. 6.

Hereinafter, the button cell according to the other embodiment will be described with respect to a portion different from the button battery according to the embodiment described above.

FIG. 6 is a cross-sectional view showing a portion of the button cell according to the other embodiment.

Referring to FIG. 6, the insulating structure 600 of the button cell 1004 according to the other embodiment includes the first portion 610, the second portion 620, and a third portion 630.

The first portion 610 is adjacent to the bonding layer 500, and is disposed between the cap plate 300 and the edge 401 of the flange 410 that is the edge 401 of the terminal plate 400. The first portion 610 contacts the rear surface 401a of the edge 401 of the terminal plate 400 and the cap plate 300.

The second portion 620 bends and extends from the first portion 610 to contact the cap plate 300 and the side surface 401c of the edge 401 of the flange 410 of the terminal plate 400.

The third portion 630 bends and extends from the second portion 620 to contact the front surface 401b of the edge 401 of the terminal plate 400.

The insulating structure 600 includes the first portion 610, the second portion 620, and the third portion 630 that extend from between the rear surface 401a of the edge 401 of the flange 410 of the terminal plate 400 and the cap plate 300 to the front surface 401b of the edge 401 of the flange 410 via the side surface 401c of the edge 401 of the flange 410 so that a short circuit between the edge 401 of the flange 410 of the terminal plate 400 and the cap plate 300 is prevented.

Thus, the button cell 1004 according to the other embodiment includes the first portion 610, the second portion 620, and the third portion 630 that are adjacent to the bonding layer 500 between the cap plate 300 and the terminal plate 400 insulated and bonded by the bonding layer 500 and extend from between the cap plate 300 and the edge 401 of the terminal plate 400 to the front surface 401b of the edge 401 of the flange 410 via the side surface 401c of the edge 401 of the flange 410 so that a short circuit between the cap plate 300 and the terminal plate 400 is suppressed during a manufacturing process of the button cell 1004, during transportation of the button cell 1004, or during use of the button cell 1004.

In addition, the button cell 1004 according to the other embodiment includes the first portion 610, the second portion 620, and the third portion 630 that are adjacent to the bonding layer 500 disposed between the cap plate 300 and the flange 410 of the terminal plate 400 and extend from between the cap plate 300 and the edge 401 of the flange 410 of the terminal plate 400 to the front surface 401b of the edge 401 of the flange 410 via the side surface 401c of the edge 401 of the flange 410 so that the bonding layer 500 and the insulating structure 600 suppress moisture from penetrating into the inside of the button cell 1004 through between the cap plate 300 and the terminal plate 400 from the outside. Thus, a voltage drop due to the moisture penetrated from the outside is prevented.

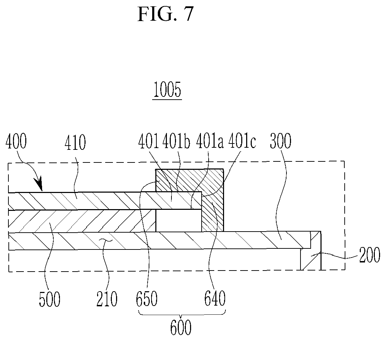

Hereinafter, a button cell according to another embodiment will be described with reference to FIG. 7.

Hereinafter, the button cell according to the other embodiment will be described with respect to a different portion from the button battery according to the embodiment described above.

FIG. 7 is a cross-sectional view showing a portion of the button cell according to the other embodiment.

Referring to FIG. 7, the insulating structure 600 of the button cell 1005 according to the other embodiment includes a fourth portion 640 and a fifth portion 650.

The fourth portion 640 is adjacent to the bonding layer 500, and is disposed between the cap plate 300 and the edge 401 of the flange 410 that is the edge 401 of the terminal plate 400. The fourth portion 640 contacts the side surface 401c of the edge 401 of the terminal plate 400 and the cap plate 300.

The fifth portion 650 bends and extends from the fourth portion 640 to contact the front surface 401b of the edge 401 of the terminal plate 400.

The insulation structure 600 includes the fourth portion 640 and the fifth portion 650 that extend from between the side surface 401c of the edge 401 of the flange 410 of the terminal plate 400 and the cap plate 300 to the front surface 401b of the edge 401 of the flange 410 so that a short circuit between the edge 401 of the flange 410 of the terminal plate 400 and the cap plate 300 is prevented.

Thus, the button cell 1005 according to the other embodiment includes the fourth portion 640 and the fifth portion 650 that are adjacent to the bonding layer 500 between the cap plate 300 and the terminal plate 400 insulated and bonded by the bonding layer 500 and extend from between the cap plate 300 and the side surface 401c of the edge 401 of the terminal plate 400 to the front surface 401b of the edge 401 of the flange 410 so that a short circuit between the cap plate 300 and the terminal plate 400 is suppressed during a manufacturing process of the button cell 1005, during transportation of the button cell 1005, or during use of the button cell 1005.

In addition, the button cell 1005 according to the other embodiment includes the fourth portion 640 and the fifth portion 650 that are adjacent to the bonding layer 500 disposed between the cap plate 300 and the flange 410 of the terminal plate 400 and extend from between the cap plate 300 and the side surface 401c of the edge 401 of the flange 410 of the terminal plate 400 to the front surface 401b of the edge 401 of the flange 410 so that the bonding layer 500 and the insulating structure 600 suppress moisture from penetrating into the inside of the button cell 1005 through between the cap plate 300 and the terminal plate 400 from the outside. Thus, a voltage drop due to the moisture penetrated from the outside is prevented.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

| | |
|---|---|
| button cell | 1000, 1002, 1003, 1004, 1005 |
| electrode assembly | 100 |
| first electrode | 110 |
| second electrode | 120 |
| separator | 130 |
| first electrode tab | 140 |
| second electrode tab | 150 |
| case | 200 |
| opening | 210 |
| cap plate | 300 |
| through-hole | 301 |
| terminal plate | 400 |
| edge | 401 |
| rear surface | 401a |
| front surface | 401b |
| side surface | 401c |
| flange | 410 |
| protrusion | 420 |
| bonding layer | 500 |
| insulating structure | 600 |
| first portion | 610 |
| second portion | 620 |
| third portion | 630 |
| fourth portion | 640 |
| fifth portion | 650 |

## Claims

1. A button cell (1000, 1002, 1003, 1004, 1005) comprising:
an electrode assembly (100) that includes a first electrode (110), a second electrode (120), and a separator (130) disposed between the first electrode (110) and the second electrode (120);
a case (200) that is connected to the first electrode (110) to accommodate the electrode assembly (100) and includes an opening (210) exposing the electrode assembly (100);
a cap plate (300) that is coupled to the case (200) to cover an outer area of the opening (210) and includes a through-hole (301) exposing a central area of the opening (210);
a terminal plate (400) that is connected to the second electrode (120) to be insulated and bonded to the cap plate (300) and covers the through-hole (301);
a bonding layer (500) that is disposed between the cap plate (300) and the terminal plate (400) and insulates and bonds between the cap plate (300) and the terminal plate (400); and
an insulating structure (600) that is adjacent to the bonding layer (500) and is disposed between the cap plate (300) and an edge (401) of the terminal plate (400).

2. The button cell (1000, 1002, 1003, 1004, 1005) of claim 1, wherein the insulating structure (600) includes a different material from a material of the bonding layer (500).

3. The button cell (1000, 1002, 1003, 1004, 1005) of claim 1 or 2, wherein the edge (401) of the terminal plate (400) comprises:
a rear surface (401a) facing the cap plate (300);
a front surface (401b) disposed at an opposite surface of the rear surface (401a); and
a side surface (401c) connecting between the rear surface (401a) and the front surface (401b).

4. The button cell (1000, 1002, 1003, 1004, 1005) of any one of claims 1 to 3s, wherein the insulating structure (600) comprises a first portion (610) in contact with the rear surface (401a) of the edge (401) of the terminal plate (400).

5. The button cell (1000, 1002, 1003, 1004, 1005) of claim 4, wherein the first portion (610) contacts the cap plate (300).

6. The button cell (1000, 1002, 1003, 1004, 1005) of any one of claims 1 to 4, wherein the insulating structure (600) further comprises a second portion (620) that extends from the first portion (610) to contact the side surface (401c) of the edge (401) of the terminal plate (400).

7. The button cell (1000, 1002, 1003, 1004, 1005) of any one of claims 1 to 4 and 6, wherein the insulating structure (600) further comprises a third portion (630) that extends from the second portion (620) to contact the front surface (401b) of the edge (401) of the terminal plate (400).

8. The button cell (1000, 1002, 1003, 1004, 1005) of any one of claims 1 to 3, wherein the insulating structure (600) comprises a fourth portion (640) contacting the side surface (401c) of the edge (401) of the terminal plate (400) and the cap plate (300).

9. The button cell (1000, 1002, 1003, 1004, 1005) of any one of claims 1 to 3 and 8, wherein the insulating structure (600) further comprises a fifth portion (650) that extends from the fourth portion (640) and contacts the front surface (401b) of the edge (401) of the terminal plate (400).

10. The button cell (1000, 1002, 1003, 1004, 1005) of any one of claims 1 to 9, wherein the terminal plate (400) comprises:
a flange (410) that covers the through-hole (301) and contacts the bonding layer (500) and the insulating structure (600); and
a protrusion (420) that protrudes from the flange (410) to pass through the through-hole (301),
wherein the edge (401) is an edge of the flange (410).

11. The button cell (1000, 1002, 1003, 1004, 1005) of any one of claims 1 to 10, wherein the insulating structure (600) extends from the edge (401) of the flange (410) to an edge of the cap plate (300).

12. The button cell (1000, 1002, 1003, 1004, 1005) of any one of claims 1 to 11, wherein the electrode assembly (100) further comprises:
a first electrode tab (140) that extends from the first electrode (110) to be welded to the case (200); and
a second electrode tab (150) that extends from the second electrode (120) to be welded to the protrusion (420) of the terminal plate (400).

13. The button cell (1000, 1002, 1003, 1004, 1005) of any one of claims 1 to 12, wherein the case (200) and the cap plate (300) have the same polarity as a polarity of the first electrode (110), and the terminal plate (400) has the same polarity as a polarity of the second electrode (120).

14. The button cell (1000, 1002, 1003, 1004, 1005) of any one of claims 1 to 13, wherein the button battery includes a coin cell.

15. The button cell (1000, 1002, 1003, 1004, 1005) of any one of claims 1 to 14, wherein a ratio (height/diameter) of a height to a diameter of the button cell is 1 or less.
